# EUROPEAN PATENT APPLICATION

(11) **EP 4 647 533 A1**
(43) Date of publication of application: **12.11.2025**
(21) Application number: 24175053.8
(22) Date of filing: 09.05.2024
(51) Int. Cl.: C25B 1/04, C25B 9/73, C25B 9/60, C25B 9/63, C25B 9/75, C25B 9/77, C25B 15/00, H01M 8/0273, H01M 8/1004

(54) **FLEXIBLE CELL FRAME FOR ELECTROLYSER STACKS**

(71) Applicant: Siemens Energy Global GmbH & Co. KG, 81739 München (DE)
(72) Inventor: Satheesh, Abhiroop, 91341 Röttenbach (DE)

(57) **Abstract**

The invention is about an electrochemical cell (1) comprising: a membrane electrode assembly (2) comprising an electrolyte layer (3) and first and second electrode layers (4, 5) disposed on opposite major surfaces (6) of the electrolyte layer (3), first and second gas diffusion layers (7, 8) disposed directly on opposite major surfaces (9) of the membrane electrode assembly (2), and a cell frame (10) formed around a periphery (11) of the membrane electrode assembly (2) and the first and second gas diffusion layers (7, 8), wherein in uncompressed state a thickness of the cell frame (10) in a stacking direction (12) of the layers (3, 4, 7, 8) is smaller than a thickness of the membrane electrode assembly (2) and first and second gas diffusion layers (7, 8) combined, and a first stiffness of the cell frame (10) is at most twice as high as a second stiffness of a combination of membrane electrode assembly (2) and the first and second gas diffusion layers (7, 8). The invention further relates to an electrolyser stack (17) comprising a plurality of electrochemical cells (1).

## Description

### TECHNICAL FIELD

The present invention pertains to the field of electrolysis technology, specifically to the design of electrochemical cells within an electrolyser stack.

### BACKGROUND

Electrolysers are critical for a variety of industrial processes, particularly in hydrogen production. They utilize electric current to break down water into hydrogen and oxygen, a process known as electrolysis. A key component in this process are the electrochemical cells, which are typically arranged in a stack.

Current designs and constructions of electrolyser stacks and the electrochemical cells contained therein, however, have various limitations and challenges, including efficiency, durability, and cost.

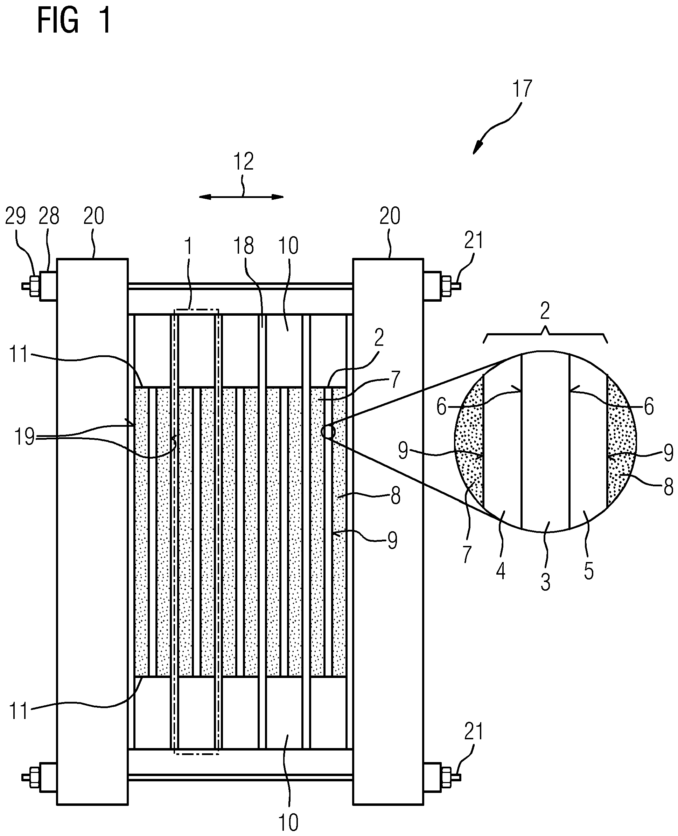

The current stack design for hydrogen PEM (proton exchange membrane) electrolysers is shown in Figure 1. It consists of several electrochemical cells held together between two endplates through tie rods. The tie rods, with the help of endplates, compress the cell frame (plastic polymer) and inner components (GDLs and MEA).

MEA stands for "Membrane Electrode Assembly". It is the centerpiece of an electrolyser. In a membrane electrode assembly, a proton exchange membrane is arranged between two electrodes in which a catalyst is embedded. Catalysts can also be deposited on electrodes. During the reaction, the catalyst ensures that the reaction at the electrode takes place more efficiently by reducing the required activation energy. The electrodes are electrically insulated from each other by the PEM. They form the anode and the cathode respectively. An electric current flows through the MEA during electrolysis, splitting water into hydrogen and oxygen.

In an electrolysis stack, bipolar plates act as separators between individual electrochemical cells, preventing the mixing of product gases from adjacent cells. A bipolar plate consists of two moulded and joined half plates and ensures the mass transport of the reactants and products within the electrochemical cell. The electrolysis system can be cooled via the cavities created by the connection of two half plates in each case if this is not done via the process water. In terms of materials, bipolar plates need to be electrically conductive, corrosion-resistant, and chemically stable. They are often made from materials like graphite or metal, depending on the type of electrolyser (alkaline or PEM).

A Gas Diffusion Layer (GDL) is a key component in the electrochemical cell for an electrolyser stack that facilitates the transport of fluids involved in the reaction. It is typically a porous layer situated between the catalyst and the bipolar plates. The GDL plays a critical role in the effective operation of an electrolyser by ensuring proper distribution of gases, managing water transport, and providing electrical conductivity. It is typically made of carbon-based materials and sometimes incorporates a hydrophobic layer to assist in water management. The design and quality of GDLs can significantly impact the performance and efficiency of the electrolyser.

For a pressurized PEM, the pressure is contained inside the electrochemical cells in an axial direction by utilizing the compression provided by the tie rods, and in a lateral direction by the frictional locking between the cell frame and the bipolar plate. Furthermore, from the electrochemical requirements, there should be sufficient contact pressure between GDLs and MEA to decrease the ohmic resistance between them.

In the existing design, the cathode-side GDL features a lower stiffness, which permits it to compress against the more rigid anode GDL, thereby ensuring adequate contact pressure during the assembly process. Unfortunately, owing to tolerances stemming from the manufacturing of various components, a highly flexible carbon fleece is incorporated on the cathode side to counterbalance these tolerances. However, these carbon fleeces have lower electrical conductivity, which in turn increases the ohmic resistance and reduces the overall cell performance.

The current assembly of the stack consists of two stages: in the first stage, the inner components such as MEA and GDL are compressed until the cell frame, and in the next stage, the inner components, including the cell frame, are compressed. The second stage determines the final contact pressure on the MEA i.e., the final height of the assembly. Since the cell frame is made of a comparatively stiff material, the compression in the second stage is much less compared to the first stage. Moreover, overcompression would result in undesirable bending of the bipolar plates as it is supported by components having different stiffness. Furthermore, if the tolerance on the cell frame is too large, it is difficult to achieve the required contact pressure in the final stage.

### SUMMARY OF INVENTION

To summarize, the objects of the invention are firstly, to eliminate the carbon fleeces, which would lead to a decrease in ohmic resistance and an improvement in cell performance, secondly, to provide sufficient contact pressure on the membrane electrode assembly, which is required for reducing ohmic resistance, and thirdly, to reduce the influence of part tolerance on contact pressure.

The problem is solved by an electrochemical cell comprising a membrane electrode assembly comprising an electrolyte layer and first and second electrode layers disposed on opposite major surfaces of the electrolyte layer, first and second gas diffusion layers disposed directly on opposite major surfaces of the membrane electrode assembly, and a cell frame formed around a periphery of the membrane electrode assembly and the first and second gas diffusion layers, wherein in uncompressed state a thickness of the cell frame in a stacking direction of the layers is smaller than a thickness of the membrane electrode assembly and first and second gas diffusion layers combined, and a first stiffness of the cell frame is at most twice as high as a second stiffness of a combination of membrane electrode assembly and the first and second gas diffusion layers.

A membrane electrode assembly can be modelled as a 1-D spring model. In a prior art design, there are two main paths: path 1, where the effective stiffness is nearly equal to the stiffness of the carbon fleece and path 2, where the stiffness is provided by the cell frame.

The stiffness of the second path is about four times that of the first path, indicating that the cell frame is much more rigid than the inner components. This imbalance can restrict compression in stage 2, as it may cause bending of the bipolar plate.

The proposed solution focuses on making the cell frame more flexible while eliminating the carbon fleeces. The goal is to achieve comparable stiffness for both Path 1 and Path 2, i.e., the cell frame and inner components. As a result, during stage 2 compression, both the cell frame and inner components can be compressed together. Furthermore, in this design, the resulting contact pressure on the MEA is less affected by tolerance, as the final height of the assembly determines the contact pressure.

However, while reducing the stiffness of the cell frame, it is essential to ensure sufficient frictional interlocking with bipolar plates, when the electrochemical cells are stacked. The requirements of flexibility, similar to the inner components, and frictional interlocking can be achieved by providing a layer of expanded metal. An expanded metal is already used in the cathodic GDL layer. The same material could be used for the cell frame.

In a preferred embodiment of the electrochemical cell the cell frame comprises a first frame layer of a plastic polymer and at least a second frame layer of an expanded metal, which are arranged one above the other in at least some regions of the cell frame. The plastic polymer layer can provide excellent resistance to chemicals used in the electrochemical cell ensuring the longevity of the cell as it prevents corrosion that might occur due to the chemicals used. The expanded metal layer can provide structural strength to the cell. It can also serve as a means for heat dissipation. Electrochemical cells can generate heat during operation, and the metal layer can help manage this heat effectively to prevent overheating. Most importantly, however, the expanded metal layer reduces the stiffness of the cell frame to such an extent that it becomes roughly comparable to the stiffness of the internal components of the cell, i.e. the gas diffusion layers and the MEA.

In another preferred embodiment of the electrochemical cell the cell frame further comprises a third frame layer of an expanded metal, the second and the third frame layers being disposed on opposite major sides of the first frame layer. The additional metal layer can further enhance the strength and rigidity of the electrochemical cell, protecting it from physical damage and ensuring its longevity. Also heat produced during the operation of the cell can be more effectively managed, as there are two layers of expanded metal to facilitate heat dissipation. This can help prevent overheating and improve the efficiency and safety of the cell. With layers of expanded metal on both sides of the polymer layer, the mechanical stresses exerted on the electrochemical cell can be more evenly distributed, reducing the likelihood of deformation or damage.

It is advantageous when the electrolyte layer is a proton exchange membrane. PEMs have excellent proton conductivity, which is crucial for the efficient functioning of the electrochemical cell. They allow for the rapid transport of protons from the anode to the cathode, which can enhance the performance of the cell. PEMs can operate effectively at relatively low temperatures (around 80°C or lower), making them suitable for a wide range of applications, including portable devices and transportation. PEMs are typically made from robust materials like sulfonated tetrafluoroethylene-based fluoropolymer-copolymer (Nafion), which can withstand the harsh operating conditions of an electrochemical cell and provide a long lifespan. And PEMs are chemically stable and resistant to the corrosive environment inside the cell, which can further enhance the durability and longevity of the cell.

The object of the invention, which is directed to an electrolyser stack is solved by an electrolyser stack comprising a plurality of electrochemical cells according to the invention, wherein bipolar plates are arranged on both major surfaces of the electrochemical cells. Bipolar plates serve to distribute the reactant fluids evenly over the entire active area of the cell, thereby improving the efficiency of the electrochemical reaction. Bipolar plates are typically made from conductive materials, so they can facilitate electron flow from one cell to the next, increasing the overall electrical conductivity of the stack. Bipolar plates can help dissipate the heat generated by the electrochemical reactions, preventing overheating and enhancing the overall performance and safety of the electrolyser stack. By using bipolar plates, the cells can be stacked more closely together, reducing the overall size of the electrolyser stack and making it more compact. Bipolar plates provide additional structural support to the electrochemical cells, protecting them from physical damages and enhancing the overall durability of the stack. Bipolar plates can be made from relatively inexpensive materials, contributing to the cost-effectiveness of the design.

In the inventive electrolyser stack the electrochemical cells are advantageously held together between two endplates through tie rods. This configuration provides the stack with mechanical strength and stability. It ensures that the electrochemical cells and other components are held firmly in place, reducing the risk of damage from vibrations or shocks. The use of endplates and tie rods ensures uniform pressure distribution across all electrochemical cells in the stack. This is important for maintaining consistent performance across the electrochemical cells. Tie rods allow for easier assembly and disassembly of the stack, facilitating maintenance and repair activities. The endplates can also serve as heat sinks, helping to dissipate heat generated during the operation of the electrolyser stack and maintaining optimal operating temperatures. This setup allows for a compact design, which can be beneficial in applications where space is a constraint. The pressure exerted by the tie rods helps maintain the integrity of seals between the cells, preventing leaks that could reduce efficiency or lead to safety issues.

The inventive design offers the following advantages:
- The contact pressure on the MEA is more controllable, as the compression stage does not have a hard stop at the cell frame during assembly.
- The contact pressure on the MEA is less influenced by the cell frame because the final cell height determines the MEA contact pressure, and this can be controlled since the entire cell is deformable.
- Ohmic losses in the carbon fleeces are avoided, thereby increasing cell performance.
- Frictional interlocking between the cell frame and bipolar plates in the inventive design is greater than in the prior art design, due to the surface structure of the expanded material of the cell frame. This improved interlocking further enhances the stability and performance of the system.
- The number of disc springs required is reduced compared to the prior art design. The number of disc spring packages is directly related to the stiffness of the stack, meaning a stiffer stack requires more disc springs.

### BRIEF DESCRIPTION OF DRAWINGS

**FIG 1** shows an electrolyser stack with five cells,
**FIG 2** shows a 1-D spring model of the compression stages in the stack assembly of electrochemical cells according to the prior art,
**FIG 3** shows a schematic and highly simplified representation of the basic structure of the cell frame 10 according to the invention,
**FIG 4** shows a 1-D spring model of the compression stages in the stack assembly of electrochemical cells according to the invention,
**FIG 5** shows an expanded metal used in gas diffusion layers,
**FIG 6** shows a segment of an expanded metal and
**FIG 7** shows an example of an expanded metal used in GDLs in contact with flat plates.

### DESCRIPTION OF EMBODIMENTS

Figure 1 shows the basic structure of an electrolyser stack 17 with five electrochemical cells 1 arranged next to each other in stacking direction 12, each electrochemical cell 1 with a membrane electrode assembly 2 comprising an electrolyte layer 3 and first and second electrode layers 4, 5 disposed on opposite major surfaces 6 of the electrolyte layer 3. First and second gas diffusion layers 7, 8 are disposed on opposite major surfaces 9 of the membrane electrode assembly 2. A cell frame 10 is formed around a periphery 11 of the membrane electrode assembly 2 and the first and second gas diffusion layers 7, 8.

Bipolar plates 18 are arranged on both major surfaces 19 of the electrochemical cells 1 and the electrochemical cells 1 are held together between two endplates 20 through tie rods 21. Disc springs 28 are often used together with tie rods 21. They serve to exert a constant pressure on the electrolyser stack 17, even if the material expands or contracts over time. This is important to maintain the integrity of the electrolyser stack 17 during operation and prevent leakage or damage. Disc springs 28 are typically not threaded and therefore cannot be screwed directly onto the tie rods 21. Instead, they are slid onto the tie rods 21 and then held in place by nuts 29. The nut 29 is screwed onto the thread of the tie rod 21 and exerts pressure on the disc spring 28, regulating tension throughout the stack assembly.

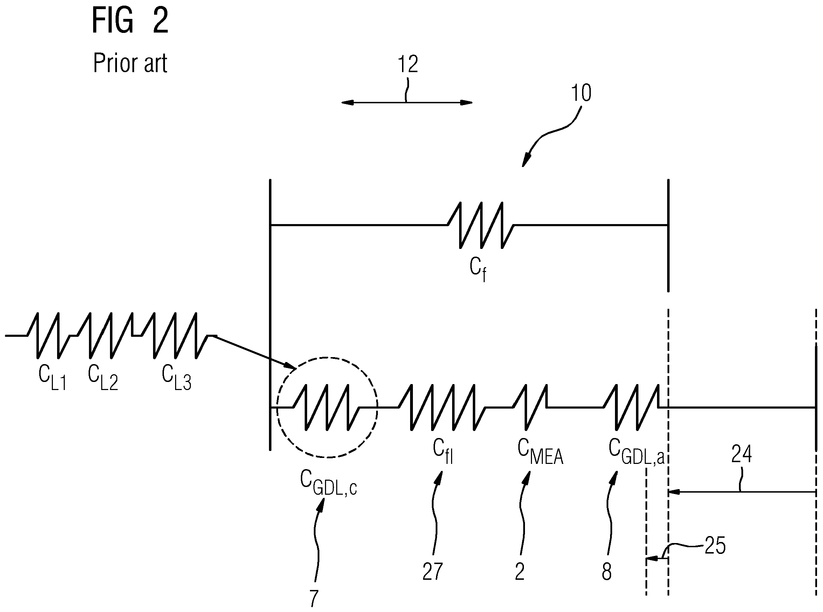

An electrochemical cell 1 can be visualised using a one-dimensional spring model. FIG 2 shows such a model for a prior art electrochemical cell 1. The upper part of FIG 2 refers to the cell frame 10 with a spring stiffness c_{f} and precompression dimensions. The membrane-electrode assembly 2 with the first and second gas diffusion layers 7, 8 is shown below indicating the stiffnesses that can be assigned to individual sublayers, as there are the stiffness c_{GDL,c} for the first gas diffusion layer 7 on the cathode side, showing that when constructing such a gas diffusion layer 7 from several different layers, these layers are considered individually with their respective stiffnesses c_{L1}, c_{L2}, c_{L3}. There is also the stiffness c_{MEA} of the electrode membrane assembly 2 as well as the stiffness c_{GDL,a} of the second gas diffusion layer 8 on the anode side. Of course, the stiffness c_{fl} of the highly flexible carbon fleece 27 used to compensate for manufacturing inaccuracies has to be considered in this model.

In the presented prior art configuration, there are two primary paths that play different roles in determining the overall stiffness of the electrochemical cell 1. Path 1 24 is characterized by an effective stiffness that is almost equivalent to the stiffness c_{fl} of the carbon fleece 27. On the other hand, the stiffness in Path 2 25 is primarily provided by the stiffness c_{f} of the cell frame 10 itself.

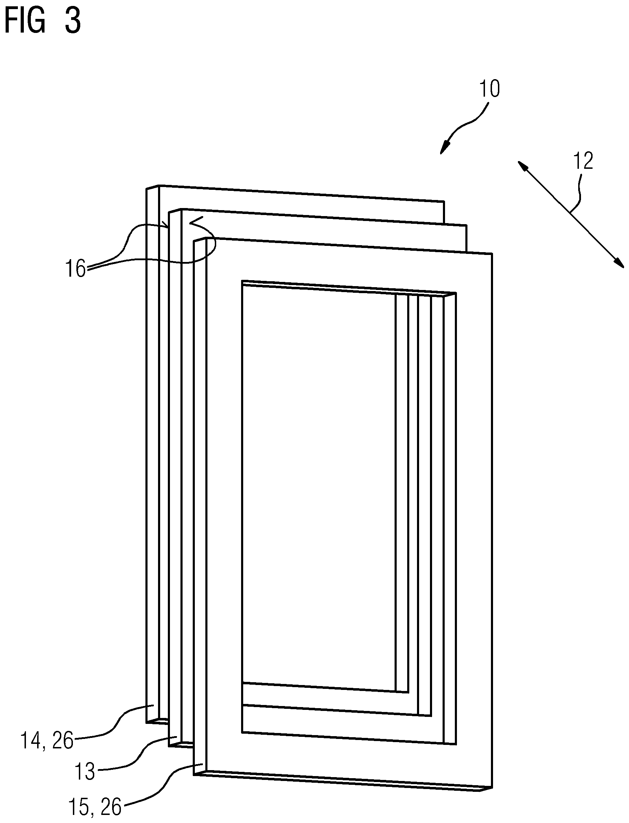

FIG 3 shows a schematic and highly simplified representation of the basic structure of the cell frame 10 according to the invention. In the embodiment of FIG 3 the cell frame 10 consists of three parts: the first frame layer 13 of a plastic polymer as well as a second frame layer 14 and a third frame layer 15 being disposed on opposite major sides 16 of the first frame layer 13 and both made of expanded metal In other words, the first, second and third frame layers 13, 14, 15 are arranged one above the other in a stacking direction 12 of the cell frame 10 in the order expanded metal sheet 26 - plastic polymer - expanded metal sheet 26.

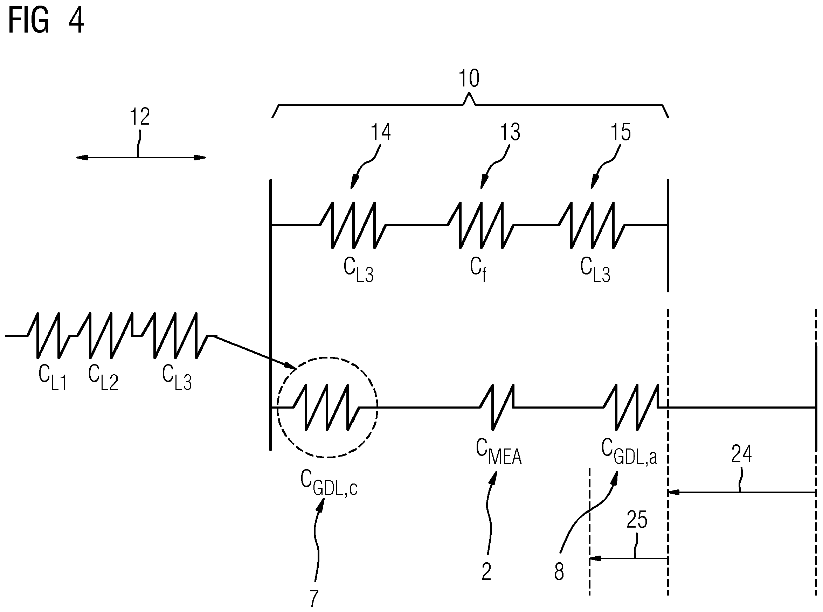

FIG 4 shows the 1-D spring model for an electrochemical cell 1 according to the invention. Again, the upper part refers to the cell frame 10. In the inventive design the first frame layer 13 is a plastic polymer with stiffness c_{f} already known from the prior art design. A second frame layer 14 and a third frame layer 15 being disposed on opposite major sides 16 of the first frame layer 13 are both made of expanded metal with a stiffness c_{L3} smaller than the stiffness c_{f}. However, unlike shown in FIG 3, the first, second and third frame layers 13, 14, 15 do not necessarily have to have the same shape or thickness. Moreover, the thickness of the cell frame 10 is reduced compared to the prior art design, which can decrease the creep of the plastic cell frame 10.

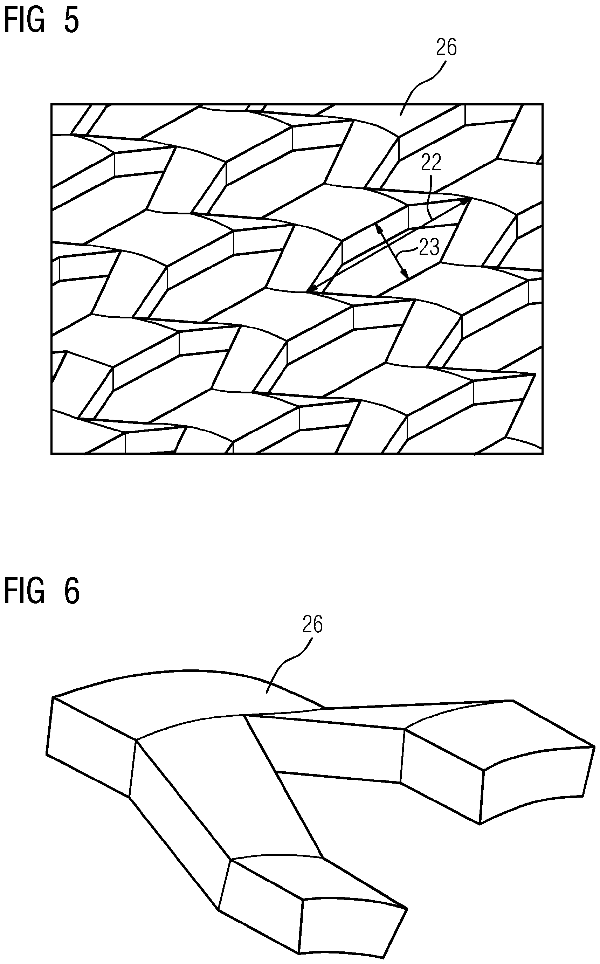

It is also worth noting that a required stiffness of the expanded metal sheet 26 can be obtained by controlling the geometric parameters, such as height 22 and width 23 of openings of the expanded metal sheet 26 shown in FIG 5. FIG 6 shows a segment of the expanded metal sheet 26.

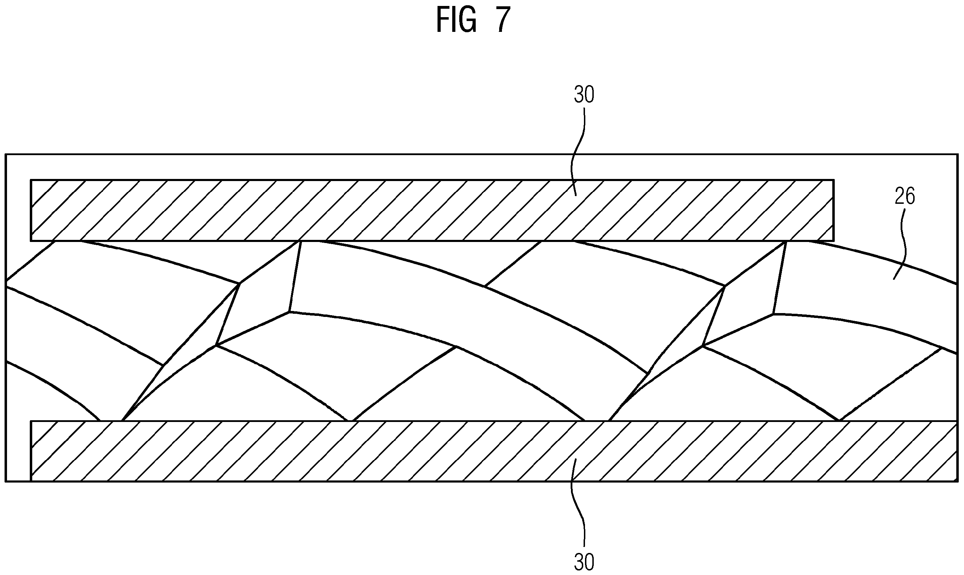

The surface structure of the expanded metal sheet 26 provides sufficient frictional interlocking, and its porous structure offers the required flexibility. See FIG 7 for an expanded metal sheet 26 in contact with flat plates 30.

### REFERENCE SIGNS LIST

- 1: electrochemical cell
- 2: membrane electrode assembly
- 3: electrolyte layer
- 4: first electrode layer
- 5: second electrode layer
- 6: major surfaces of the electrolyte layer
- 7: first gas diffusion layer
- 8: second gas diffusion layer
- 9: opposite major surfaces of the membrane electrode assembly
- 10: cell frame
- 11: periphery of the membrane electrode assembly and the first and second gas diffusion layers
- 12: stacking direction
- 13: first frame layer
- 14: second frame layer
- 15: third frame layer
- 16: major sides of the first frame layer
- 17: electrolyser stack
- 18: bipolar plate
- 19: major surfaces of electrochemical cells
- 20: endplate
- 21: tie rod
- 22: height of the openings of the expanded metal sheet
- 23: width of the openings of the expanded metal sheet
- 24: path 1
- 25: path 2
- 26: expanded metal sheet
- 27: highly flexible carbon fleece
- 28: disc spring
- 29: nut
- 30: flat plate
- c_{f}: stiffness of the cell frame
- c_{GDL,c}: stiffness of the first gas diffusion layer on the cathode side
- c_{L1}: stiffness of first sub-layer of the first gas diffusion layer
- c_{L2}: stiffness of second sub-layer of the first gas diffusion layer
- c_{L3}: stiffness of third sub-layer of the first gas diffusion layer
- c_{MEA}: stiffness of the electrode membrane assembly as well as the stiffness
- c_{GDL,a}: stiffness of the second gas diffusion layer on the anode side
- c_{fl}: stiffness of the fleece

## Claims

1. An electrochemical cell (1) comprising:
a membrane electrode assembly (2) comprising an electrolyte layer (3) and first and second electrode layers (4, 5) disposed on opposite major surfaces (6) of the electrolyte layer (3),
first and second gas diffusion layers (7, 8) disposed directly on opposite major surfaces (9) of the membrane electrode assembly (2), and
a cell frame (10) formed around a periphery (11) of the membrane electrode assembly (2) and the first and second gas diffusion layers (7, 8),
**characterized in that** in uncompressed state a thickness of the cell frame (10) in a stacking direction (12) of the layers (3, 4, 7, 8) is smaller than a thickness of the membrane electrode assembly (2) and first and second gas diffusion layers (7, 8) combined, and a first stiffness of the cell frame (10) is at most twice as high as a second stiffness of a combination of membrane electrode assembly (2) and the first and second gas diffusion layers (7, 8).

2. The electrochemical cell (1) according to claim 1, wherein the cell frame (10) comprises a first frame layer (13) of a plastic polymer and at least a second frame layer (14) of an expanded metal, which are arranged one above the other in at least some regions of the cell frame (10).

3. The electrochemical cell (1) according to claim 2, the cell frame (10) further comprising a third frame layer (15) of an expanded metal, the second and the third frame layers (14, 15) being disposed on opposite major sides (16) of the first frame layer (13).

4. The electrochemical cell (1) according to one of the preceding claims, wherein the electrolyte layer (3) is a proton exchange membrane.

5. An electrolyser stack (17) comprising a plurality of electrochemical cells (1) according to one of the preceding claims, wherein bipolar plates (18) are arranged on both major surfaces (19) of the electrochemical cells (1).

6. The electrolyser stack (17) according to claim 5, wherein the electrochemical cells (1) are held together between two endplates (20) through tie rods (21).
